(19) Europäisches Patentamt
European Patent Office
Office européen des brevets

(11) **EP 2 251 706 B1**

(12) **FASCICULE DE BREVET EUROPEEN**

(45) Date de publication et mention
de la délivrance du brevet:
**12.10.2016 Bulletin 2016/41**

(51) Int Cl.:
***G01S 7/42*** *(2006.01)*    ***G01S 13/00*** *(2006.01)*
***G01S 13/87*** *(2006.01)*    ***G01S 7/00*** *(2006.01)*
***G01S 13/28*** *(2006.01)*

(21) Numéro de dépôt: **10162689.3**

(22) Date de dépôt: **12.05.2010**

(54) **Système de surveillance multistatique optimisé**

Optimiertes multistatisches Überwachungssystem

Optimised multi-static surveillance system

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **15.05.2009 FR 0902365**

(43) Date de publication de la demande:
**17.11.2010 Bulletin 2010/46**

(73) Titulaire: **Thales
92400 Courbevoie (FR)**

(72) Inventeurs:
• **Moruzzis, Michel
91290, La Norville (FR)**
• **Muller, Daniel
92370, CHAVILLE (FR)**
• **Ferrier, Jean-Marie
75015, Paris (FR)**

(74) Mandataire: **Lucas, Laurent Jacques
Marks & Clerk France
Conseils en Propriété Industrielle
Immeuble Visium
22, Avenue Aristide Briand
94117 Arcueil Cedex (FR)**

(56) Documents cités:
**WO-A2-02/097467      GB-A- 2 242 328
GB-A- 2 405 760       US-A- 4 347 513
US-A- 4 499 468       US-A1- 2006 238 407**

• **H. DENG, B. HIMED: "Target Detection Using
Orthogonal Netted Radar System (ONRS)"
RADAR SYSTEMS, 2007 IET INTERNATIONAL
CONFERENCE ON, 15 octobre 2007 (2007-10-15),
pages 1-4, XP002568382**

## Description

L'invention concerne le domaine de la surveillance radar, et en particulier le domaine des systèmes de surveillance utilisant des équipements multistatiques (émetteurs, récepteurs et unités centrales), fixes ou portés par des plateformes mobiles (véhicules terrestres, navals, aériens ou spatiaux).

Les systèmes de surveillance multistatiques présentent de manière connue certaines caractéristiques spécifiques qui les différentient, en terme de conception, de réalisation, de déploiement et de maintenance, des systèmes monostatiques.

Parmi ces spécificités on peut en particulier noter le fait qu'un tel système exploite généralement les émissions radioélectriques produites par plusieurs émetteurs distincts de préférence dispersés autour de la zone à surveiller ou encore à l'intérieur de cette zone, ces émetteurs étant des équipements faisant partie du système, coopérants, ou des équipements non coopérant dont les émissions ont une finalité première autre que l'utilisation à des fins de détection. Ce peut être des émetteurs de radiodiffusion par exemple.

On peut également noter au titre des spécificités que, dans un tel système, on compte généralement plusieurs équipements chargés de la réception des signaux radioélectriques ces équipements étant dispersés dans la zone à surveiller.

On peut encore noter au titre des spécificités que dans un tel système, qui comme tout système de détection comporte une unité de commande et de décision, la liaison entre l'unité de commande et les différents émetteurs et récepteurs nécessite la mise en place de moyens de communications permettant à la fois de contrôler les différents éléments depuis l'unité de commande et de récupérer et d'exploiter les informations élaborées par ces éléments, en particulier des informations relatives aux objets détectés dans la zone surveillée fournies par les différents récepteurs.

Par suite, lorsque l'on met en oeuvre un tel système, différent problèmes se posent parmi lesquels on peut citer:

- des problèmes liés au spectre des signaux émis et à la détermination de l'origine des signaux reçus,
- des problèmes liés à la mise en oeuvre de moyens de communication entre les différents éléments du système et l'unité de commande,
- des problèmes liés à la tolérance du système aux pannes,
- des problèmes liés à la capacité d'adaptation du système face à des variations de son environnement.

Les problèmes liés au spectre des signaux émis et à la détermination de l'origine des signaux reçus ont notamment pour origine le fait qu'un récepteur donné ne peut exploiter les signaux qu'il reçoit que s'il sait identifier et repérer la source ayant émis le signal radioélectrique considéré. Ceci se traduit en pratique par les deux contraintes suivantes:

a) le récepteur a connaissance de la position relative de chaque émetteur pouvant être à l'origine d'un signal reçu,
b) le récepteur sait reconnaître à tout instant lequel des émetteurs est à l'origine du signal qu'il reçoit.

Généralement, et en particulier si les émetteurs utilisés par le système sont des émetteurs dédiés à cet usage, ces contraintes sont levées en attribuant à chaque émetteur une bande de fréquence particulière. Ainsi chacun des récepteurs ayant connaissance de la répartition spectrale des émissions, un émetteur donné peut déterminer quel émetteur est à l'origine du signal reçu. Par suite la position (bistatique) d'un objet réfléchissant ce signal peut être déterminée de manière connue en mesurant l'écart de temps qui sépare la réception du signal réfléchi par l'objet de la réception du signal reçu directement de l'émetteur.

Cette solution présente l'avantage d'être simple à mettre en oeuvre dans son principe, chaque émetteur disposant alors d'une bande de fréquence qui lui est propre. Cependant, dans le cas où le système met en jeu un nombre conséquent d'émetteurs, chaque émetteur dispose pour émettre d'une bande passante limitée qui, compte tenu du fait que la bande de fréquences totale allouée au système est nécessairement limitée, peut s'avérer insuffisante pour répondre aux exigences de résolution imposées au système de détection.

Les problèmes liés à la mise en oeuvre de moyens de communication entre les différents éléments du système et l'unité de commande sont quant à eux généralement liés au compromis à réaliser entre le coût de réalisation et de mise en oeuvre des moyens choisis et la contrainte de réaliser un système de détection multistatique ayant une flexibilité donnée.

Autrement dit une installation comportant des moyens de communication utilisant des liaisons filaires sera par exemple moins onéreuse à intégrer dans le système considéré qu'une installation comportant des moyens de communication radio. En effet la mise en place de moyens de liaison radio nécessite en pratique que chaque élément du système, émetteur, récepteur et unité de commande, soit pourvu des moyens radios appropriés.

La demande de brevet anglais qui porte la référence GB 2 405 760 déposé par la société BAE SYSTEMS Ltd, publiée le 09/03/2005, décrit à ce propos un système de détection et de guidage missile comportant plusieurs radars

**EP 2 251 706 B1**

de détection associés les uns aux autres et pourvus de moyens de communication auxiliaires leur permettant d'échanger des informations les uns avec les autres, des informations de détection en particulier. Cependant, les moyens de communication utilisent ici un canal de communication radioélectrique différent du canal radioélectrique utilisé pour la détection.

L'article de H. Deng et B. Himed intitulé "Target Détection Using Orthogonal Netted Radar System (ONRS)", publié le 15 octobre 2007 à la conférence internationale des systèmes radar, décrit un système radar employant une pluralité de stations radar permettant de créer un radar multistatique, avec une unité de commande et de contrôle des stations radar. Cependant les moyens de communications des stations radar avec l'unité de commande et de contrôle utilisent un canal de communication différent du canal radar.

En revanche, une installation comportant des moyens de communication utilisant des liaisons filaires sera par nature moins facile à déployer sur une zone de surveillance vaste. Elle sera également plus susceptible de voir son efficacité dégradée, voire de tomber en panne, du fait de la rupture, volontaire ou non, d'une ou plusieurs liaisons filaires pouvant intervenir durant la période d'exploitation du système. En outre une structure de communication filaire parait en pratique peu adaptée au déploiement d'un système de détection mobile.

Les problèmes liés à la capacité d'adaptation du système face à des variations de son environnement renvoient en particulier à la capacité du système de détection de modifier les formes d'ondes émises par les différents moyens d'émission en fonction de variations de l'environnement dans lequel la zone de surveillance est située. Cette capacité est en pratique limitée par la bande passante allouée à chaque émetteur, de sorte que cette capacité d'adaptation est généralement limitée.

Pour tenter de limiter les effets des diverses contraintes citées précédemment, on a généralement recours à la mise en oeuvre de plusieurs solutions spécifiques chaque solution ayant pour objet de résoudre un problème particulier. Il s'ensuit que l'ajout des moyens matérialisant ces solutions rend la mise en oeuvre du système plus complexe et le système lui-même plus onéreux.

Un but de l'invention est de proposer une solution optimisée permettant en particulier de réaliser un système de détection radar multistatique qui répondent aux diverses contraintes énoncées précédemment.

A cet effet l'invention a pour objet un système radar multistatique comportant une unité de commande et de contrôle, qui contrôle la configuration d'une pluralité d'éléments émetteurs et récepteurs au travers de liaisons de commande et traite les informations de détection produites par les récepteurs. Selon l'invention chaque élément émetteur de ce système est configuré pour émettre, sur une bande de fréquences commune sensiblement égale à la bande de fréquence globale B allouée au système, un signal modulé selon une loi de modulation supportant elle-même un code binaire propre à l'émetteur considéré. Chaque élément récepteur, par ailleurs adapté à la bande de fréquences B, est quant à lui configuré pour décoder les signaux reçus et identifier, au moyen du code supporté par un signal reçu donné, l'émetteur à l'origine de ce signal. Le codage appliqué à la forme d'onde est par ailleurs déterminé de façon à ce que l'étalement de spectre occasionné au signal émis par un émetteur donné n'excède pas la bande de fréquence B allouée au système.

Dans un mode de réalisation particulier du système radar multistatique selon l'invention, l'unité de commande et de contrôle comporte un émetteur-récepteur, adapté à la bande de fréquence B allouée au système. L'émetteur est configuré pour émettre un signal modulé par un code binaire d'identification et par des trames de données binaires représentant un message de commande, et le récepteur pour recevoir un signal modulé par un code binaire d'identification et par des trames de données binaires représentant un message d'information. Chaque élément émetteur comporte en outre des moyens de réception adaptés à la bande de fréquences B et configurés pour décoder les signaux reçus et identifier au moyen du code porté par le signal reçu les commandes émises par l'unité de commande et de traitement. Chaque élément récepteur comporte quant à lui des moyens d'émission adaptés à la bande de fréquences B et configurés pour émettre un signal modulé par un code binaire d'identification correspondant à l'élément récepteur considéré et par une trame de données binaires constituant un message d'information à destination de l'unité de commande et de traitement.

Dans une configuration particulière du système radar multistatique selon l'invention, les messages transmis par l'unité de commande et de traitement aux différents éléments émetteurs et récepteurs comportent des commandes relatives à la forme d'onde devant être émise par les éléments émetteurs, ainsi qu'à l'association des éléments émetteurs et récepteurs.

Dans une autre configuration du système radar multistatique selon l'invention, les messages transmis à l'unité de commande et de traitement par un élément émetteur ou récepteur comportent des informations relatives à l'état de fonctionnement de l'élément considéré.

Dans une autre configuration du système radar multistatique selon l'invention, les messages transmis à l'unité de commande et de traitement par un élément émetteur ou récepteur, comportent également des informations relatives à la position géographique de l'élément considéré.

Dans une autre configuration du système radar multistatique selon l'invention, les messages transmis à l'unité de commande et de traitement par un élément récepteur comportent également des informations relatives à la détection d'objets dans l'espace couvert par le récepteur considéré.

EP 2 251 706 B1

Les caractéristiques et avantages de l'invention seront mieux appréciés grâce à la description qui suit, description qui expose l'invention au travers d'un mode de réalisation particulier pris comme exemple non limitatif et qui s'appuie sur les figures annexées, figures qui représentent:

- la figure 1, une illustration schématique des éléments constituant un système multistatique selon l'invention, dans une forme de mise en oeuvre simple;
- la figure 2, une illustration du principe de la répartition spectrale des signaux émis selon l'invention;
- la figure 3, une illustration schématique d'une autre forme de mise en oeuvre du système multistatique selon l'invention;

On s'intéresse ici au problème de la surveillance primaire, c'est à dire ne nécessitant pas de coopération de la part des objets que l'on cherche à détecter, ces objets pouvant être terrestres, navals, aériens ou spatiaux.

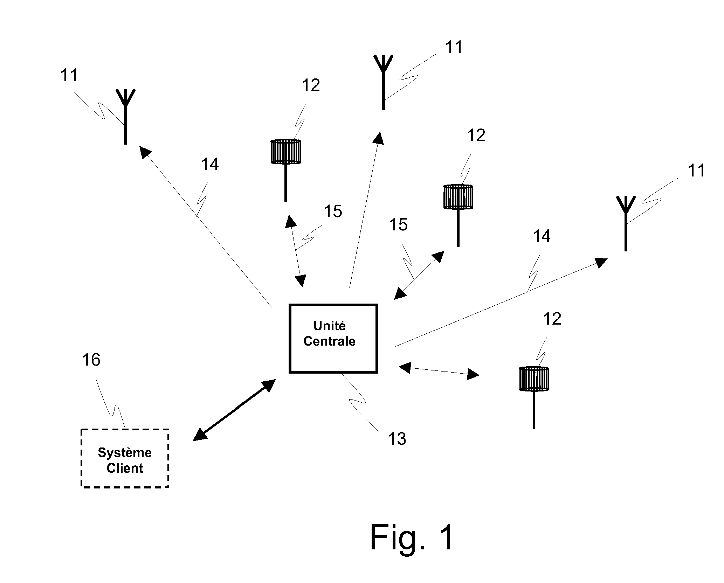

Comme l'illustre la figure 1, la solution apportée par l'architecture selon l'invention repose sur la mise en oeuvre d'un réseau d'émetteurs 11 et de récepteurs omnidirectionnels 12, les émetteurs et les récepteurs étant configuré de façon à être en liaison les uns avec les autres ainsi qu'avec une unité de commande et de contrôle 13 qui peut elle-même être constituée de différents éléments espacés ou localisés en un même lieu comme illustré sur la figure 1. Cette unité de commande et de contrôle assure principalement la mise en configuration des différents éléments du système, émetteurs et récepteurs et l'exploitation des informations produites par les récepteurs, les informations produites par un récepteur étant principalement relatives aux caractéristiques des objets détectés par ce récepteur.

Accessoirement, les informations produites peuvent également être des informations relatives à l'état de fonctionnement du récepteur considéré.

La mise en configuration des différents éléments du système est réalisée par l'envoi des commandes de configuration appropriées 14 aux différents éléments du système. Ces commandes comportent principalement le type de forme d'onde qui doit être émise par chaque émetteur et traitée par chaque récepteur. Dans une forme préférée de mise en oeuvre, la forme d'onde émise est identique pour tous les émetteurs. Comme cela est développé dans la suite de la description, la transmission des commandes de configuration 14 peut être réalisée par différents moyens. La synchronisation de la réception sur l'émission peut être par ailleurs réalisée classiquement soit par écoute du trajet direct sur une voie spécifique du récepteur, soit par transmission via une liaison de communication

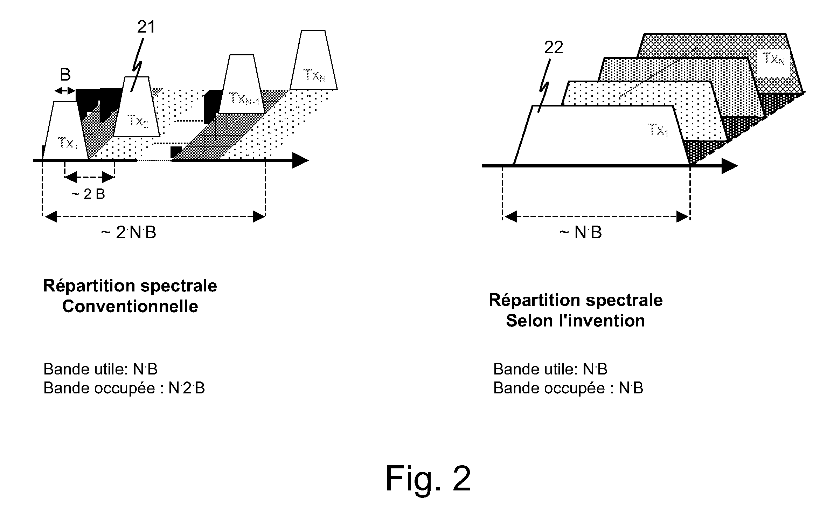

De manière classique, dans un système de détection multistatique, la détection est assurée d'une part par l'émission de formes d'ondes distinctes par chaque émetteur, et d'autre part grâce à la réception simultanée de tous les signaux réfléchis par une cible. Généralement, dans un système multistatique, chacun des émetteurs du système est identifié par la bande passante du signal qu'il émet. A cet effet le spectre du signal émis occupe une bande de fréquence qui lui est dédiée, comme l'illustre la figure 2-a, ce qui a pour conséquence de limiter fortement la bande passante 21 que peut occuper chaque émetteur. En pratique, si le système comporte N émetteurs, la bande passante utile b du signal émis par chaque émetteur doit être limitée de façon à respecter, de manière connue, la relation suivante:

$$2 \cdot N \cdot b \leq B \qquad\qquad [1]$$

dans laquelle B représente la bande passante allouée au fonctionnement du système considéré.

Par suite, les signaux provenant de chaque émetteur sont identifiés et séparés les uns des autres par simple filtrage. Cependant, cette limitation de bande passante a pour conséquence que la forme d'onde utilisée doit être choisie de manière restrictive en faisant attention à ce que l'étalement de spectre occasionné par la modulation du signal émis reste contenu dans la bande b.

Contrairement à ce principe de fonctionnement connu, le principe d'émission selon l'invention consiste, comme l'illustre la figure 2-b, à allouer à chacun des émetteurs une bande passante 22 sensiblement égale à la totalité de la bande de fréquence B allouée au système. De la sorte la forme d'onde utilisée peut présenter un étalement de spectre beaucoup plus important que dans le cas classique. Par suite on peut avantageusement obtenir une précision de mesure en distance accrue. En outre le nombre d'émetteur que peut mettre en oeuvre un tel système, compte-tenu de la bande de fréquence qui lui est allouée, se trouve avantageusement accrue dans une large mesure.

Par suite, chaque émetteur occupant dans cette configuration la même bande de fréquence 22, l'identification d'un émetteur donné n'est plus réalisée au moyen de la bande de fréquence qu'il occupe dans la bande globale B, mais par un signal d'identification qui vient coder la forme d'onde émise. De la sorte en fonctionnement, tous les émetteurs émettent une même forme d'onde présentant un même encombrement spectral, la forme d'onde émise par chacun des émetteurs présentant toutefois un codage propre à l'émetteur considéré. Autrement dit, le signal émis par chaque émetteur diffère de celui émis par les autres émetteurs par la superposition sur la forme d'onde utilisé pour la détection, d'un code spécifique à l'émetteur considéré. De la sorte, tous les émetteurs peuvent émettre simultanément sans se perturber les uns les autres.

Selon l'invention, les signaux émis présentent donc un étalement spectral lié à la superposition d'un code d'identification à l'onde utilisée pour la détection. Cet étalement spectral est cependant défini de façon à ce que le spectre de l'onde émise ne s'étende pas au-delà de la bande de fréquences allouée au système.

Selon l'invention, le code spécifique qui vient moduler la forme d'onde utilisée est par ailleurs défini de façon à ce que la modulation de la forme d'onde générale par ce code n'altère pas les performances des récepteurs. Ce code est en particulier déterminé de façon à permettre d'une part d'optimiser la fonction détection, en particulier en minimisant le niveau des lobes secondaires de la fonction d'autocorrélation du signal émis, et d'autre part d'isoler au mieux les signaux réfléchis par une cible provenant de différents émetteurs, en minimisant en particulier le niveau d'intercorrélation des codes utilisés par les différents émetteurs.

Par suite, l'origine des ondes reçues par un récepteur donné composant le système multistatique, est déterminée par décodage du code d'identification intégré à la forme d'onde. L'origine du signal reçu étant ainsi déterminée, le récepteur considéré peut appliquer au signal reçu un traitement bistatique classique. La localisation 3D repose sur les informations disponibles au niveau de chaque signal (bistatique) élémentaire, et par un traitement (cohérent ou non) de fusion de signaux sur l'ensemble des bases bistatiques formées par les couples émetteur-récepteur pouvant être considérés.

Pour gérer l'ensemble du système, l'unité de commande et de contrôle 13 met en oeuvre des moyens de communications appropriés.

Dans une forme simple de mise en oeuvre du système multistatique selon l'invention, illustrée par la figure 1, les informations transmises aux différents éléments, émetteurs et récepteurs sont essentiellement les informations relatives aux formes d'ondes utilisées. Les informations transmises à l'unité de commande et de contrôle 13, sont en outre, essentiellement, les informations relatives aux détections enregistrées par les différents récepteurs. Les liaisons 14 entre l'unité de commande et de contrôle 13 et les émetteurs 11 sont alors par exemple des liaisons unidirectionnelles, tandis que les liaisons 15 entre l'unité de commande et de contrôle 13 et les récepteurs 12 sont des liaisons bidirectionnelles. Ces liaisons peuvent être soit de simples liaisons filaires, soit des liaisons radio électriques, utilisant avantageusement la bande de fréquences allouée au système.

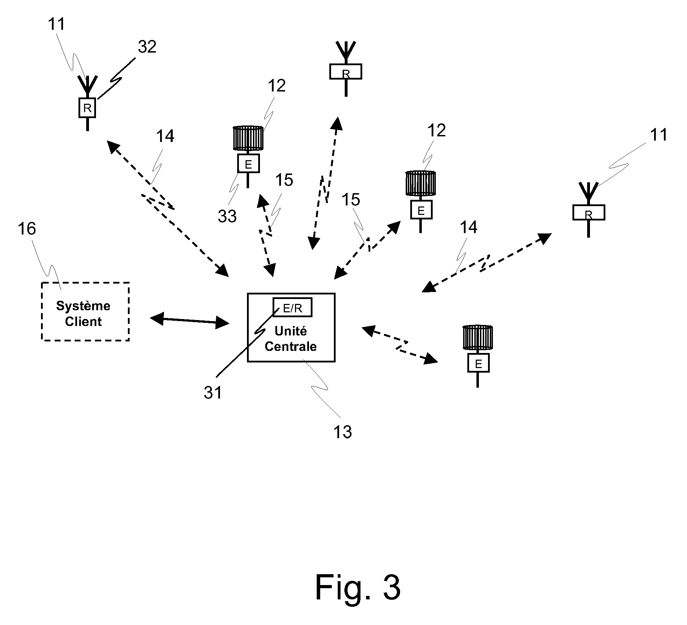

Dans ce second cas, illustré par la figure 3, l'unité de commande et de contrôle 13 comporte des moyens d'émission et de réception 31, de préférence omnidirectionnels, lui permettant de transmettre un signal radio électrique de commande contenant notamment l'information relative à la forme d'onde choisie et de recevoir les informations provenant des différents éléments 11 et 12 du système. En outre, chaque émetteur 11 comporte alors des moyens 32 lui permettant de recevoir les informations transmises et d'identifier les signaux émis par l'unité de commande et de contrôle 13. Chaque élément récepteur 12 comporte quant à lui des moyens 33 lui permettant de transmettre à l'unité de commande et de contrôle 13 les informations de détection.

Selon l'invention les informations de commandes transmises par l'unité de commande et de contrôle ainsi que les informations transmises à l'unité de commande et de contrôle 13 par les éléments 11 et 12, sont portées par des signaux dont la bande passante est incluse dans la bande B allouée au système. Chaque information est par ailleurs associée à un code particulier qui identifie l'élément à l'origine de l'information, unité de contrôle 13, émetteur 11 ou récepteur 12.

Avantageusement une telle configuration ne nécessite que peu de modifications par rapport à la configuration de base illustrée par la figure 1.

Ainsi, les éléments émetteurs 11 sont simplement équipés de moyens appropriés à la réception des commandes transmises par l'unité de commande et de contrôle 13, les informations transmises à l'unité de commande et de contrôle 13 étant par ailleurs avantageusement transmises par les moyens d'émission déjà utilisés par l'élément émetteur 11 pour émettre le signal de détection.

Inversement, les éléments récepteurs 12 sont simplement équipés de moyens appropriés à l'émission des informations destinées à l'unité de commande et de contrôle 13, les informations transmises par l'unité de commande et de contrôle 13 étant par ailleurs avantageusement transmises aux moyens de réception déjà utilisés par l'élément récepteur 12 pour recevoir les signaux directement issus des émetteurs 11 ou résultant de la réflexion de ces signaux par des objets.

Le code émis par les moyens 31 de l'unité de commande et de contrôle 13 permet à chaque récepteur 12 de déterminer que le signal reçu est un message de commande et qu'il doit être traité différemment des signaux de détection. De même les codes émis par les moyens 32 des éléments récepteurs 12 permettent à chaque récepteur de déterminer que le signal reçu est une information à destination de l'unité de commande et de contrôle 13. Enfin lorsqu'un élément émetteur 11 émet une information à destination de l'unité de commande et de contrôle 13, celle-ci est associée à un code qui permet à chaque élément récepteur de savoir que le signal reçu correspondant à ce code est destiné à l'unité de commande et de contrôle 13 et non à la détection.

L'utilisation, selon l'invention, d'émissions radioélectriques dans lesquelles le signal émis est un signal codé, permet ainsi avantageusement de réaliser de manière simple une liaison sans fil entre l'unité de commande et de contrôle 13 et les autres éléments 11 et 12 du système. Elle ne nécessite en particulier que la mise en place d'un émetteur-récepteur 31, de préférence omnidirectionnel, au niveau de l'unité de commande et de contrôle 13, l'ajout de moyens de réception, de préférence omnidirectionnels, au niveau des émetteurs 11 et de moyens d'émission, de préférence omnidirectionnels également, au niveau des récepteurs 12. La liaison sans fil ainsi réalisée permet avantageusement de réaliser de manière simple des systèmes multistatique mobiles et facilement redéployables.

La forme de mise en oeuvre illustrée par la figure 3, permet avantageusement de réaliser un système multistatique dont la structure est reconfigurable tant en fonction de variations du fonctionnement opérationnel qu'en fonction de l'apparition de disfonctionnements accidentels affectant tel ou tel élément du système.

Ainsi par exemple, les liaisons radioélectriques omnidirectionnelles reliant l'unité de commande et de contrôle aux autres éléments peuvent être mises à profits pour faire remonter à l'unité de commande et de contrôle des informations relatives à l'état de fonctionnement de chacun des autres éléments, chaque élément comportant dans ce cas des moyens de réaliser un test intégré de son propre état de fonctionnement. De la sorte, ayant connaissance qu'un élément est en panne, l'unité de commande et de contrôle peut avantageusement reconfigurer l'ensemble du système de façon à minimiser l'impact de la panne sur les performances de détection d'ensemble.

De la même façon, dans le cas d'un système multistatique dont les éléments sont mobiles, ces liaisons peuvent être mises à profit pour permettre à l'unité de commande et de contrôle de déterminer les positions absolues des différents éléments ainsi que leurs positions relatives. Pour ce faire chaque élément peut être par exemple pourvu d'un système de positionnement de type GPS ou autre, et transmettre périodiquement sa position à l'unité de commande et de contrôle. Ainsi, la position de chaque élément étant connue, l'ensemble peut être configuré de manière optimale à tout moment. Par ailleurs, la position géographique de chaque récepteur étant ainsi connue, il est alors avantageusement possible de réaliser la géolocalisation des aéronefs pouvant être détectés par les différents récepteurs.

Il est à noter que les informations transmises par les différents éléments du système à l'unité de commande et de contrôle 13 peuvent être soit exploitées en local au niveau de celle-ci, soit à distance par un système d'exploitation global 16, dit système client, relié à celle-ci et auquel sont transmises ces informations. De la même façon les commandes de configuration des différents éléments ainsi que la forme d'onde utilisée peuvent être déterminées soit en local au niveau de l'unité de commande et de contrôle, soit à distance par un système global 16 ayant connaissance de données opérationnelles ou environnementales de nature à induire une modification du fonctionnement du système, ces modifications étant alors mises en oeuvre par l'intermédiaire de l'unité de commande et de contrôle. Dans ce dernier cas, de façon à optimiser la forme et la pertinence des informations fournies au système client, l'unité de commande et de contrôle peut notamment comporter:

- un moyen de calcul automatique permettant d'optimiser la couverture réalisée par le système, destiné à fournir les emplacements de la zone couverte favorables à l'implantation de tel ou tel élément 11 ou 12 du système. Le moyen de calcul automatique de la couverture permet de traduire, en temps réel, les informations météos en grandeurs influençant la performance du système. Ce moyen intègre des moyens d'évaluation des conditions de propagation basée sur une cartographie numérique du terrain et une cartographie météo;
- un moyen pour déterminer le fonctionnement optimal des récepteurs 12, dont le rôle est d'optimiser les performances locales du système en fonction d'une situation globale, pour renforcer le gain de traitement dans certaines régions mal couvertes par exemple;
- des moyens d'acquisition des informations météorologiques qui peuvent consister en:

  - un accès à un réseau de diffusion général des informations collectées par des stations météorologiques existantes;
  - un accès à un réseau spécifique, un réseau de stations météorologiques, une station étant intégrée à chaque élément, émetteur 11 ou récepteur 12, du système multistatique;
  - l'utilisation d'une voie particulière de traitement du système multistatique lui-même, une voie "wind-profiler" ou plus classiquement voie météo polarimétrique par exemple; cette voie étant formée au niveau d'une ou de plusieurs de ses éléments, émetteur 11 ou récepteur 12.

- des moyens d'analyse automatique permettant :

  - d'optimiser le traitement du radar vis a vis de l'environnement météorologique (par exemple réglage des traitements TFAC...);
  - de fournir des informations sur la couverture actuelle du système, avec éventuellement une capacité d'alerte permettant à l'utilisateur d'être informé d'une situation anormale;
  - de fournir des informations sur certains phénomènes, de type "wake-vortex" par exemple, pouvant avoir un effet sur la sécurité aérienne.

**Revendications**

1. Système radar multistatique, comportant une unité de commande et de contrôle (13), qui contrôle la configuration d'une pluralité d'éléments émetteurs (11) et récepteurs (12) au travers de liaisons de commande (14) et traite les informations de détection produites et transmises par les récepteurs (12); chaque élément émetteur (11) ou récepteur (12) étant configuré pour fonctionner dans la totalité d'une bande de fréquences commune sensiblement égale à la bande de fréquence globale B allouée au système, chaque élément du système étant **caractérisé par** un code d'identification, **caractérisé en ce que**:

   - chaque élément émetteur (11) est configuré pour émettre, sur la bande de fréquences commune un signal de détection modulé selon une loi de modulation supportant elle-même un code binaire propre à l'émetteur considéré ainsi que des données relatives à son fonctionnement;
   - Chaque élément récepteur (12) est configuré pour décoder le code d'identification superposé au signal reçu dans la bande de fréquence commune et déterminer l'élément du système (11, 13) à l'origine de ce signal;

   ainsi que pour décoder les signaux qui accompagnent ce code d'identification;

   - l'unité de commande et de contrôle (13) comporte un émetteur-récepteur (31) configuré pour fonctionner dans la bande de fréquence globale B allouée au système et assurer l'émission d'informations de commande destinées aux autres éléments du système (11, 12), ces informations étant associées au code d'identification correspondant à l'unité de commande et de contrôle, ainsi que la réception des informations de détection transmises par les récepteurs (12) dans la bande de fréquence globale B;

   chaque élément émetteur (11) comportant en outre des moyens de réception configurés pour recevoir un signal dans la bande de fréquence commune B de façon à prendre en compte les informations de commande transmises par l'unité de commande et de contrôle (13) et que chaque élément récepteur (12) comportant en outre des moyens d'émission configurés pour émettre dans la bande de fréquence commune B un signal modulé par un code binaire codant son code d'identification ainsi que des données relatives aux détections opérées.

2. Système radar multistatique selon la revendication 1, **caractérisé en ce que** l'émetteur-récepteur (31) de l'unité de commande et de contrôle (13) est configuré pour émettre un signal modulé par un code binaire d'identification et par des trames de données binaires représentant un message de commande, et pour recevoir un signal modulé par un code binaire d'identification et par des trames de données binaires représentant un message d'information transmis par un autre élément, émetteur (11) ou récepteur (12).

3. Système radar multistatique selon l'une des revendications 1 ou 2, **caractérisé en ce que** les messages transmis par l'unité de commande et de traitement (13) aux différents éléments émetteurs (11) et récepteurs (12) comportent des commandes relatives à la forme d'onde devant être émise par les éléments émetteurs, ainsi qu'à la configuration des différents éléments émetteurs (11) et récepteurs (12).

4. Système radar multistatique selon l'une des revendications 1 à 3, **caractérisé en ce que** les messages transmis à l'unité de commande et de traitement (13) par un élément émetteur (11) ou récepteur (12) comportent des informations relatives à l'état de fonctionnement de l'élément considéré.

5. Système radar multistatique selon la revendication 4, **caractérisé en ce que** les messages transmis à l'unité de commande et de traitement (13) par un élément émetteur (11) ou récepteur (12) comportent également des informations relatives à la position géographique de l'élément considéré.

6. Système radar multistatique selon l'une des revendications 4 à 5, **caractérisé en ce que** les messages transmis à l'unité de commande et de traitement (13) par un élément récepteur (12) comportent également des informations relatives à la détection d'objets dans l'espace couvert par le récepteur considéré.

**Patentansprüche**

1. Multistatisches Radarsystem, umfassend eine Steuer- und Kontrolleinheit (13), welche die Konfiguration einer Vielzahl von Sende- (11) und Empfangselementen (12) über Steuerverbindungen (14) steuert und die von den Empfängern (12) generierten und übertragenen Erkennungsinformationen verarbeitet, wobei jedes Sende- (11) oder Empfangselement (12) so konfiguriert ist, dass es auf dem gesamten gemeinsamen Frequenzband funktioniert, das im Wesentlichen mit dem globalen Frequenzband B übereinstimmt, das dem System zugeordnet ist, und wobei jedes Element des Systems durch einen Identifikationscode charakterisiert ist, **dadurch gekennzeichnet, dass**;

- jedes Sendeelement (11) konfiguriert ist, um auf dem gemeinsamen Frequenzband ein Erkennungssignal zu entsenden, das gemäß einem Modulationsgesetz moduliert ist, das selbst einen binären Code, der dem betroffenen Sender zueigen ist, sowie Daten zu seinem Betrieb unterstützt;

- jedes Empfangselement (12) konfiguriert ist, um den Identifikationscode, der über das Signal gelegt ist, das auf dem gemeinsamen Frequenzband empfangen wird, zu entschlüsseln und um das Element des Systems (11, 13) zu bestimmen, von dem dieses Signal stammt, sowie um die Signale zu entschlüsseln, die diesen Identifikationscode begleiten;

- die Steuer- und Kontrolleinheit (13) einen Sender-Empfänger (31) umfasst, der konfiguriert ist, um im globalen Frequenzband B, das dem System zugeordnet ist, betrieben zu werden und die Entsendung von Steuerinformationen, die für die anderen Elemente des Systems (11, 12) bestimmt sind, wobei diese Informationen dem der Steuer- und Kontrolleinheit entsprechenden Identifikationscode zugeordnet sind, sowie den Empfang der von den Empfängern (12) auf dem globalen Frequenzband B übertragenen Erkennungsinformationen sicherzustellen;

jedes Sendeelement (11) umfasst außerdem Empfangsmittel, die konfiguriert sind, um ein Signal auf dem gemeinsamen Frequenzband B zu empfangen, sodass es die Steuerinformationen beachtet, die von der Steuer- und Kontrolleinheit (13) übertragen werden, und jedes Empfangselement (12) umfasst außerdem Sendemittel, die konfiguriert sind, um auf dem gemeinsamen Frequenzband B ein Signal zu entsenden, das durch einen binären Code moduliert ist, der seinen Identifikationscode und Daten zu den durchgeführten Erkennungen verschlüsselt.

2. Multistatisches Radarsystem nach Anspruch 1, **dadurch gekennzeichnet, dass** der Sender-Empfänger (31) der Steuer- und Kontrolleinheit (13) konfiguriert ist, um ein Signal, das durch einen binären Identifikationscode und durch binäre Datenrahmen, die eine Steuermeldung repräsentieren, moduliert ist, zu entsenden und um ein Signal, das durch einen binären Identifikationscode und durch binäre Datenrahmen, die eine von einem anderen Sende- (11) oder Empfangselement (12) übertragene Informationsmeldung repräsentieren, moduliert ist, zu empfangen.

3. Multistatisches Radarsystem nach einem der Ansprüche 1 oder 2, **dadurch gekennzeichnet, dass** die von der Steuer- und Verarbeitungseinheit (13) an die verschiedenen Sende- (11) und Empfangselemente (12) übertragenen Meldungen Befehle bezüglich der Wellenform, die von den Sendeelementen entsendet werden muss, sowie bezüglich der Konfiguration der verschiedenen Sende- (11) und Empfangselemente (12) beinhalten.

4. Multistatisches Radarsystem nach einem der Ansprüche 1 bis 3, **dadurch gekennzeichnet, dass** die Meldungen, die von einem Sende- (11) oder Empfangselement (12) an die Steuer- und Verarbeitungseinheit (13) übertragen werden, Informationen über den Betriebszustand des jeweiligen Elements beinhalten.

5. Multistatisches Radarsystem nach Anspruch 4, **dadurch gekennzeichnet, dass** die Meldungen, die von einem Sende- (11) oder Empfangselement (12) an die Steuer- und Verarbeitungseinheit (13) übertragen werden, ebenfalls Informationen über den geographischen Standort des jeweiligen Elements beinhalten.

6. Multistatisches Radarsystem nach einem der Ansprüche 4 bis 5, **dadurch gekennzeichnet, dass** die Meldungen, die von einem Empfangselement (12) an die Steuer- und Verarbeitungseinheit (13) übertragen werden, ebenfalls Informationen über die Erkennung von Objekten im vom jeweiligen Empfänger abgedeckten Bereich beinhalten.

**Claims**

1. A multistatic radar system comprising a command and control unit (13) which controls the configuration of a plurality of transmitter (11) and receiver (12) elements via command links (14) and processes the detection information produced and transmitted by the receivers (12); each transmitter (11) or receiver (12) element being configured to operate in the totality of a common frequency band substantially equal to the overall frequency band B allocated to the system, each element of the system being **characterised by** an identification code, **characterised in that**:

- each transmitter element (11) is configured to transmit on the common frequency band a detection signal modulated according to a modulation law itself supporting a binary code specific to the transmitter in question as well as data relating to its operation;

- each receiver element (12) is configured to decode the identification code overlaid on the signal received on the common frequency band and to determine the element of the system (11, 13) at the source of this signal; as well as to decode the signals that accompany this identification code;

- the command and control unit (13) comprises a transceiver (31) configured to operate on the overall frequency band B allocated to the system and to provide for the transmission of command information to the other elements of the system (11, 12), this information being associated with the identification code corresponding to the command and control unit, as well as the receipt of the detection information transmitted by the receivers (12) on the overall frequency band B;

each transmitting element (11) further comprising receiving means configured to receive a signal on the common frequency band B such as to take into account the command information transmitted by the command and control unit (13), and each receiver element (12) further comprising transmission means configured to transmit on the common frequency band B a signal modulated by a binary code encoding its identification code as well as data relating to the detections operated.

2. The multistatic radar system according to Claim 1, **characterised in that** the transceiver (31) of the command and control unit (13) is configured to transmit a signal modulated by a binary identification code and by binary data frames representing a command message, and to receive a signal modulated by a binary identification code and by binary data frames representing an information message transmitted by another transmitter (11) or receiver (12) element.

3. The multistatic radar system according to either of Claims 1 or 2, **characterised in that** the messages transmitted by the command and processing unit (13) to the different transmitter (11) and receiver (12) elements comprise commands relating to the waveform that has to be transmitted by the transmitter elements, as well as to the configuration of the different transmitter (11) and receiver (12) elements.

4. The multistatic radar system according to any of Claims 1 to 3, **characterised in that** the messages transmitted to the command and processing unit (13) by a transmitter (11) or receiver (12) element comprise information relating to the operating state of the element in question.

5. The multistatic radar system according to Claim 4, **characterised in that** the messages transmitted to the command and processing (13) unit by a transmitter (11) or receiver (12) element also comprise information relating to the geographical position of the element in question.

6. The multistatic radar system according to either of Claims 4 to 5, **characterised in that** the messages transmitted to the command and processing unit (13) by a receiver element (12) also comprise information relating to the detection of objects in the space covered by the receiver in question.

EP 2 251 706 B1

Fig. 1

Fig. 2

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

* GB 2405760 A

**Littérature non-brevet citée dans la description**

* **H. DENG ; B. HIMED.** *Target Détection Using Orthogonal Netted Radar System (ONRS),* 15 Octobre 2007